# EUROPEAN PATENT SPECIFICATION

(11) **EP 3 163 000 B1**
(45) Date of publication and mention of the grant of the patent: **01.09.2021**
(21) Application number: 15460100.9
(22) Date of filing: 27.10.2015
(51) Int. Cl.: E06B 3/70, E06B 3/04, B32B 7/00

(54) **A METHOD FOR MANUFACTURING A DOOR PANEL WITH DOOR FRAME ELEMENTS**
VERFAHREN ZUR HERSTELLUNG EINES TÜRBLATTS MIT TÜRRAHMENELEMENTEN
PROCÉDÉ DE FABRICATION D'UN PANNEAU DE BATTANT DE PORTE AVEC ÉLÉMENTS DE CADRE

(43) Date of publication of application: 03.05.2017
(73) Proprietor: Erkado Spólka z ograniczona odpowiedzialnoscia, 23-275 Goscieradów Ukazowy (PL)
(72) Inventor: Kozlowski, Mateusz, 37-455 Radomysl nad Sanem (PL); Bielak, Robert, 22-604 Tarnawatka (PL); Dyl, Karol, 37-455 Radomysl nad Sanem (PL); Nowosielski, Eugeniusz, 23-200 Krasnik (PL); Kedzierski, Marcin, 27-600 Sandomierz (PL); Prucnal, Tomasz, 37-450 Stalowa Wola (PL)
(74) Representative: Pankowski, Jacek

(56) References cited:
- WO-A1-2005/077654
- JP-A- 2013 087 150
- US-B2- 6 620 459
- None

## Description

The invention relates to a method for manufacturing a door leaf panel and door frame elements made exclusively of wood-based materials wrapped with a typical wrapping material, which show enhanced resistance to considerable changes in humidity, high humidity and to liquid water in conditions of at least 24-hour exposure.

In the field of wooden materials and wood-based materials, it is known that wooden and wood-based materials (lignocellulosic) absorb or release moisture from/to the environment, in accordance to the prevailing humidity conditions (air humidity and/or temperature). For example, in interior spaces which are not air-conditioned, within the Central European zone, moisture contents in objects made of lignocellulosic materials ranges from about 5% during the winter season to about 19% during the summer season.

Under the conditions of contact with moisture, wooden and wood-based materials tend to undergo dimensional changes and this directly affects the shape stability and finishing of final products made of such materials. Exposure of wooden materials to extreme values of relative humidity of air results in decrease in their mechanical properties, in dimensional changes (three-sectional shrinking and swelling phenomenon, for example), in developing unbalanced internal stresses, and as a consequence this affects the shape of elements (in particular, possibly leads to so called warping), causes development of desorption cracking, irregularities in material cohesion (with regard to chip-based and layered materials) accompanied by weakening of adhesion (adherence) forces between wood particles and adhesive joints; breaking of the coat-forming system continuity (mainly produced in wet processes) intended for finishing and strengthening of the wooden material surfaces against attacks of physical factors, as well as development of biological corrosion.

International publication WO 2007/120037 discloses a panel composed of two wooden or wood-based boards between which there are ribs made substantially at least of wooden or wood-based material. The wooden material may be a fiberboard such as MDF. The mentioned boards are provided in a frame made of wood, and at least a part of the panel is treated with a hydrophobicity-inducing agent.

International publication WO 2012/030310 discloses a method for manufacturing door panels from obtained fibers, formed by known method of hot pressing on an outline, which panels are characterized by a density of 950-1100 kg/m³, a thickness of 3.2±0.2 mm and possess heat resistance, humidity resistance, resistance against cracking, breaking and scratching, are easy to be kept clean and are wrapped with a patterned paper wrapping material where the outline is wrapped with melamine decorative paper or a paper finishing film.

Patent US 6 620 459 relates to polyisocyanate-impregnated lignocellulosic substrates having improved strength, water resistance and appearance. The method disclosed therein comprises impregnating of lignocellulosic substrates with isocyanate resin, by spraying or soaking. The excess of isocyanate resin is removed and the polymerization of the isocyanate resin absorbed by lignocellulosic substrates is effected by applying a liquid (reactive towards isocyanate, such as water) to the impregnated substrate. Next, the excess of the liquid is removed from the polyisocyanate impregnated substrate. The impregnation is effected using isocyanate resins of relatively low viscosity, such as 200-3300 centipoises at 25°C. Also, the technical solution takes into consideration the door having a top rail a bottom rail, and two stiles forming the door frames as well as two door skins disposed on opposite sides of the door frame, manufactured from the impregnated material.

It is the object of the invention to provide a method for manufacturing of a door leaf panel along with door frame elements in which arrangement its constructive materials are exclusively wood-based materials, where neither the panel nor the door frame elements undergo shape deformation or substantial delamination of the wrapping material from the surface of the wood-based material, under the conditions of high humidity, changing humidity and/or at least 24-hour exposure to liquid water.

The method for manufacturing a complete door assembly consisting of door frame elements made of hydrophobized MDF and a door leaf panel of framework structure with a structured lightweight filling, said door leaf panel having stiles and rails made of hydrophobized MDF covered at both sides with a hydrophobized HDF board, said door frame elements and door leaf panel wrapped with a wrapping material with the use of a hot-melt adhesive, providing raw door frame elements milled of hydrophobized MDF board and adjusted dimensionally mating with said panel, which door frame elements comprise two vertical columns and a cross-beam, wherein the door frame elements and door leaf panel are independently wrapped with a substantially water-unabsorbable wrapping material with the use of a hot-melt reactive polyurethane adhesive applied by means of a nozzle assembly in an amount of 60-80 g/m², at a temperature of 110-130°C, and leaving thus wrapped a door leaf panel and door frame elements for crosslinking of the adhesive, to produce a complete door assembly of improved water-durability, featured by lack of shape deformation or substantial delamination of the wrapping material from the surface of the MDF/HDF material under the conditions of high humidity, changeable humidity and/or at least 24-hour exposure to liquid water. In a preferred aspect of the invention, an additional step comprises applying at least one edge band made of a substantially water-unabsorbable wrapping material onto the narrow face of the panel. In particular, the adhesive is applied at a temperature 115-130°C. Further preferred embodiments are presented in detail herein below.

The solution according to the invention provides manufacturing of a panel and door frame elements having an increased resistance against conditions of high humidity, changing humidity and/or at least 24-hour exposure to liquid water. Such mentioned high resistance and durability under the conditions of high humidity, changing humidity and/or exposure to liquid water is surprising, because in the solution of the invention the construction material is exclusively constituted by wood-based materials which under contacting with moisture, in particular under conditions of changing humidity, undergo dimensional changes which may directly affect their shape stability and finishing of final products made of such materials.

Within the specification of invention and patent claims, at least 24-hour exposure to liquid water is meant as at least 24-hour contact of a door leaf panel and/or door frame element with drops of liquid water retained on the surface of the panel or door frame, during regular use of the panel and/or door frame. Regular use should be understood as the use of a panel and/or door frame conventionally seated in a doorway (i.e. in a substantially vertical orientation).

In a conventional solution of the prior art, a door leaf panel is a framework construction composed of stiles and rails made of a wood-based material, covered at both sides with wood-based boards. The intermediate space between the stiles and rails is packed with structured lightweight filling. Door leaf panel is wrapped with a wrapping material that confers the final aesthetic look and resistance against dirt to it. Then the panel may be provided with its hardware (hinges, locks) with preparation of such door leaf intended to close a vertical constructional opening (doorway opening).

Door frame enables mounting of a door leaf in the construction opening intended to be closed with the door. This is a frame inserted into the mentioned opening and fixed securely. Door frame most commonly is provided as an arrangement with a door leaf so as to reduce the risk of improper mating of the door frame and door panel. Door frame may be provided in a form of three components comprising two shaped vertical columns and one cross-beam, and such door frame components are assembled to obtain a door frame in the clearance of the constructional opening to be closed with the use of said door leaf panel.

In the known solutions for internal doors, vertical stiles and horizontal rails of a door leaf panel and shaped vertical columns and cross-beam are made of blocks cut from MDF material, while the facing of the framework construction of the door leaf panel is made of a HDF board. As used herein such terms as: MDF (Medium-Density-Fiberboard) material or board, and HDF (high-Density Fiberboard) board have their customary meanings and they refer to wood-based products manufactured as a result of pressing wood fibers with the use of synthetic resins, under high pressure and temperature.

Density of such MDF material/boards is typically within a range from 500 kg/m³ to 1000 kg/m3, more frequently within a range from 650 to 850 kg/m³. Density of HDF boards typically exceeds 850 kg/m³. MDF and HDF boards are particularly suitable to be used in dry environment without exposure to direct contact with water.

The internal space of a door leaf panel, between the stiles and rails, is packed with a structured lightweight filling. Such filling may have diverse forms as long as its average packing density is maintained at a level that does not cause excessive increase in the total weight of the door leaf panel, and at the same time provides a stiffening substrate to support the facing made of HDF boards.

Finishing of a door leaf panel, as well as of door frame elements, depends usually on the expected aesthetic effect to be obtained. It is most frequently effected by wrapping the individual elements with solid materials (natural veneer, finishing film, CPL laminates) or by lacquering (monochromatic lacquer or with a wood-like structural pattern). Wrapping of door leaves and door frame elements may be performed in a postforming technology which enables finishing with the same material of the main (wider) surface along with one or two parallel side surfaces.

Door leaf panel and door frame elements manufactured according to the above technology, i.e. with the use of conventional MDF and HDF boards suitable in particular to be used in dry conditions (without being exposed to direct contact with water), are not intended to be used in environments of increased humidity, changeable humidity, and in particular in at least few hours exposing to liquid water. The present inventors, for comparative reasons, also prepared door frame elements and door leaf panels with the use of conventional MDF and HDF boards to be used in substantially dry conditions, and carried out independent tests for samples of the mentioned door frames and door leaf panels to evaluate destructive effect of moisture and water in door leaf panels and door frame elements that is reflected in formation of visible deformations and other defects. The results of comparative tests are presented below in the Examples.

For the use in conditions of increased exposure to moisture, wood-based materials of the MDF and HDF type having moisture-resistance properties are intended which should show a limited range of dimensional changes and a limited range of deterioration of strength parameters when affected by water vapour or liquid water. MDF and HDF materials if a moisture-resistant type are substantially made similarly as non-hydrophobized MDF and HDF, i.e. of a standard pulp obtained from defiberization of wooden raw material, and the waterproofing effect is obtained by the use of such binding materials as resins other than urea-formaldehyde ones (since urea-formaldehyde resins show a limited resistance to moisture) and/or by the use of an increased weight ratio of binding materials relative to the pulp and/or by means of applying hydrophobizing agents to the surface.

The invention shall be further presented with reference to the drawing, where:
Fig. 1 shows a door leaf panel and door frame elements, in an orthogonal view from the front;
Fig. 2 shows a door leaf panel an orthogonal view from the bottom;
Fig. 3 shows a cross-sectional view of a door frame element;
Fig. 4 shows a section of a door leaf panel in one embodiment; and
Fig. 5 shows a section of a door leaf panel in another embodiment.

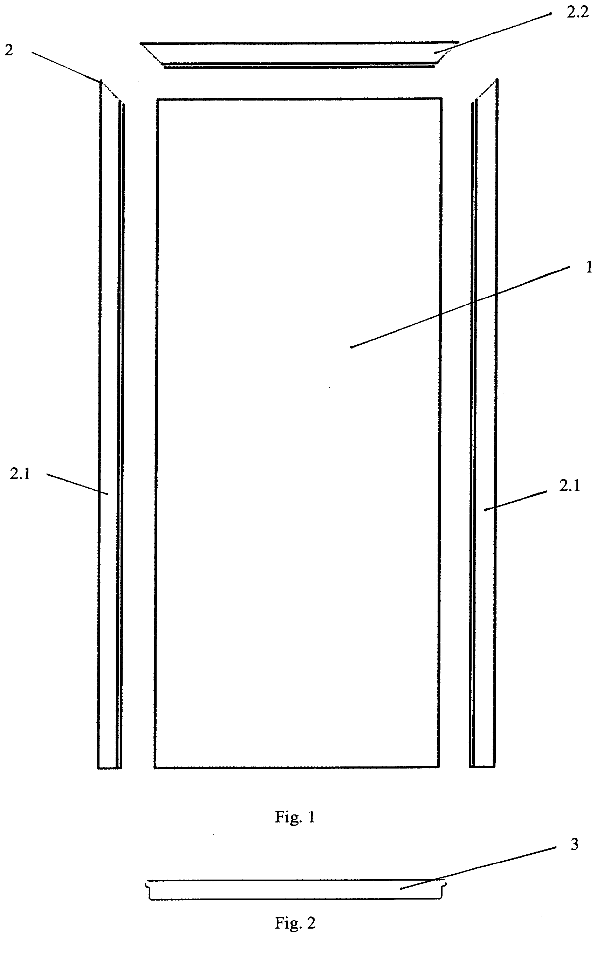

The solution according to the invention provides an arrangement of a door frame and a door leaf panel, in which arrangement neither the panel nor the door frame elements show shape deformation or substantial delamination of the wrapping material from the surface of wood-based material under conditions of high humidity, changeable humidity, and/or at least 24-hour exposure to liquid water. Fig. 1 shows generally a view of a door leaf panel 1 and door frame elements 2. According to the invention, vertical stiles and horizontal rails of the door leaf panel 1, as well as shaped vertical columns 2.1 and a cross-beam 2.2 are made of blocks cut from an MDF material, while the facing of the framework construction of the door leafpanel 1 is made of HDF board. The door leafpanel 1, shaped vertical columns 2.1 and cross-beam 2.2, that constitute elements of the door frame 2, are wrapped with a wrapping material.

The present inventors have unexpectedly stated, basing on comparative tests performed, that manufacturing of door leaf panels and door frame elements from MDF and HDF materials in a moisture-resistant version does not ensure providing an arrangement of a door leaf panel and door frame elements that show sufficient resistance to high humidity conditions, and/or at least 24-hour exposure to liquid water. What is even more surprising, the present inventors have stated that the object of the invention, i.e. manufacturing and providing a door leaf panel 1 with door frame elements 2 of an increased resistance to high humidity conditions, changeable humidity conditions and/or at least 24-hour exposure to liquid water where the constructive material for manufacturing the mentioned elements is constituted exclusively by wood-based materials, may be carried out if for the manufacture of a door leaf panel 1 and door frame elements 2 a specific combination of constructive materials, binders and finishing materials is used, preferably carried out under technological conditions according to the method of this invention.

Constructive materials for manufacturing a door leaf panel 1 and door frame elements 2 are MDF and HDF materials of a moisture-resistant type. According to the invention, a raw door leaf panel of a framework-type construction is assembled of stiles and rails made of hydrophobized MDF, the intermediate space between the stiles and rails is packed with a lightweight filling, and the framework structure is covered at both sides with a hydrophobized HDF board. Raw door frame materials, after they are cut from blocks of hydrophobized MDF dimensioned suitably to the size of the door leaf panel are milled to obtain a shape mating with the mentioned panel. Then the mentioned door leaf panel 1 and the door frame elements are wrapped independently with a wrapping material that substantially does not absorb water, with the use of a hot-melt polyurethane adhesive. The use of the presented combination of constructive materials, binders and finishing materials ensures providing a door leaf panel 1 and door frame elements 2 in which arrangement neither the panel 1 nor the door frame elements 2 show shape deformation or delamination of the wrapping material from the surface of the wood-based material under the conditions of high humidity, changeable humidity and/or at least 24-hour exposure to liquid water. Manufacturing of the arrangement of a panel 1 with door frame elements 2 is carried out under technological conditions defined by the use of a hot-melt reactive polyurethane adhesive applied by means of an adhesive application nozzle assembly in an amount of 60-80 g/m², at a temperature of 110-130°C, more preferably at a temperature of 115-130°C, where thus wrapped panel and door frame elements are left to enable crosslinking of the adhesive.

As MDF and HDF materials of a moisture resistant type, conventional wood-based materials and boards may be used manufactured of a standard pulp obtained from the process of defiberization of wooden material, in an embodiment, that provides an increased resistance under conditions of high humidity, changeable humidity, and/ or exposure to water, and obtained by the use as the binding materials of synthetic resins that offer waterproofing properties, and/or by the use of a higher amount by weight of binding resins based on the weight of the pulp, and/or by superficial application of hydrophobizing agents. Such materials may be materials produced with the use of resins as the ones indicated in US 4,241,133, such as thermoset resins, for example phenol-formaldehyde resins, resorcinol-formaldehyde resins, melamine-formaldehyde resins and condensed furfuryl alcohol resins, as well as polyisocyanates being curable at room temperature, used individually or in combination with melamine-formaldehyde resins. Water resistance may be also enhanced by spraying liquid emulsions or otherwise fluidized waxes, selected from mineral, synthetic and/or plant waxes, onto the pulp. Other additives for the pulp used for moisture resistant boards include biocides, such as fungicides.

As MDF and HDF moisture resistant materials also lignocellulosic materials impregnated with a resin comprising isocyanate groups, for example prepared by the method according to the patent specification US 6,620,459 are used. The patent specification discloses that upon impregnation further polymerization of the absorbed resin is initiated by applying water onto the surface of the material and this leads to obtaining enhanced durability and resistance to water of the material.

Exemplary MDF and HDF boards are "Medium Density Fibreboard for Use in Humid Conditions With Low Formaldehyde Content" and "High Density Fibreboard for Use in Humid Conditions With Low Formaldehyde Content" available from FINSA, of Santiago de Compostela, Spain.

As structured lightweight filling a lightweight wood-based material known in the art is used that is capable to be used for packing intermediate spaces between stiles and rails in a panel-type door leaf. Preferably, a structured lightweight filling is used with an average density (as defined relative to the volume of the intermediate space between stiles and rails) that does not exceed substantially 300 kg/m³. For example, the filling may be any wood-based material of a honeycomb structure or otherwise shaped (e.g. V-shaped) and spaced numerous shapes of wood-based boards. The filling may be also an LDF (Low-Density Fibreboard) board. Generally, it is assumed that density of LDF boards is lower than 650 kg/m³, but in the solution for a door leaf panel according to the invention the use of an LDF panel of a density of at most 300 kg/m³ is contemplated. Preferably, the structured filling is an LDF of a density of approximately 120-220 kg/m³, for example an LDF board of a density of 200 kg/m³ showing a low swelling rate, such as Homalight® D available from Homanit GmbH & Co, KG, of Herzberg am Harz, Germany.

The structured lightweight filling may be also a filling made with the use of lightweight chipboards, optionally with the use of embossed boards also referred to as hollow-core boards (with hollow channels extending inside the board). Such boards are formed and pressed in a vertical arrangement which results in perpendicular orientation of chips relative to broad planes. The lightweight structure for packing a door leaf also may be provided by DendroLight®, that has its internal part made of solid notched spruce wood glued in layers into an openwork core. Wrapping material of the board may be constituted by another thin-walled wood-based board or foils of glued wood of a small thickness. Density of the boards is within the range of 250-300 kg/m³.

In the solution according to the invention, a hot-melt reactive polyurethane adhesive is used, i.e. an adhesive that comprises a polyurethane resin that has reactive isocyanate groups capable to undergo further reaction with nucleophilic agents such as moieties having free hydroxyl and/or amino groups, for example with moisture from the environment and/or moisture from the wrapped material and/or lignocellulosic material, to produce a crosslinked polymer. Preferably, the hot-melt reactive polyurethane adhesive is an adhesive of an application temperature of 110-150°C showing a viscosity within this temperature range of 20000-50000 mPas, comprising reactive 4-isocyanatophenyl groups. An exemplary hot-melt reactive polyurethane adhesive is a hot-melt reactive adhesive (PUR) Jowatherm-Reaktant®, available under tradename Jowat 605.60 (Jowat Poland sp. z o.o., of Sady k. Poznania, Poland).

The solution of the invention uses a wrapping material being substantially water-unabsorbable, which is preferably selected from a group comprising a wrapping material having at least one carrier layer made of organic plastics and a wrapping material having at least one carrier layer made of a cellulosic material impregnated with synthetic organic resins.

A wrapping material that has at least one carrier layer made or an organic plastics is a wrapping material having at least a carrier layer of a thermoplastic organic polymer covered with a decorative layer, for example a printed layer and an overlay. Particularly preferably, a wrapping material of this kind is a PCV wrapping material that has a decorative layer that imitates the look of wood and an overlay, for example the PCV wrapping material Golden Oak TWIN.

A wrapping material having at least one carrier layer made of a cellulosic material impregnated with synthetic organic resins is a wrapping material comprising several (at least 3) layers of paper impregnated with synthetic organic resins, pressed under elevated temperature and under suitable pressure to produce a layered laminate. Preferably, a wrapping material of this kind is a laminate comprising hot pressed 3-4 layers of paper soaked with resins and a decorative paper impregnated in resins. An exemplary multilayer wrapping material is a laminate of the kind CPL (Continuous Pressure Laminate) that constitutes the base plastic obtained by joining several paper layers saturated with waterproof resins (melamine-formaldehyde resin and phenol-formaldehyde resin). CPL laminate is composed of three or four hot pressed layers of paper impregnated with resins and coated with a lacquer overlay coating of an enhanced resistance to mechanical damage and physical factors (e.g. moisture). Exemplary wrapping materials of this kind are wrapping material CPL White (foil microflex 15 morbida 8348 bianco) and wrapping material CPL Acacia - (foil microslim melaminico 15 morbida 8605) available from La-con S.p.A., of Villa Santina, Italy.

Preferably, in the solution of the invention additional step of wrapping of a door leaf panel 1 is performed in which step at least one edge band 3 in a form of a wrapping material strip is applied. The edge band 3 may be made of the same wrapping material as the one used for wrapping the door leaf panel 1 and the door frame elements 2. The edge band 3 is applied onto at least one narrow face, such as the bottom narrow face of the door leaf panel (shown in Fig. 2) and also optionally the upper narrow face of the door leaf panel 1, and wrapping is effected with the use of a hot-melt reactive polyurethane adhesive under the conditions as defined above. The door leaf panel 1 with the applied edge band 3 is more effectively protected against absorption of moisture, since the edge band 3 constitutes an additional hydrophobizing barrier that protects against penetration of moisture and impact of liquid water.

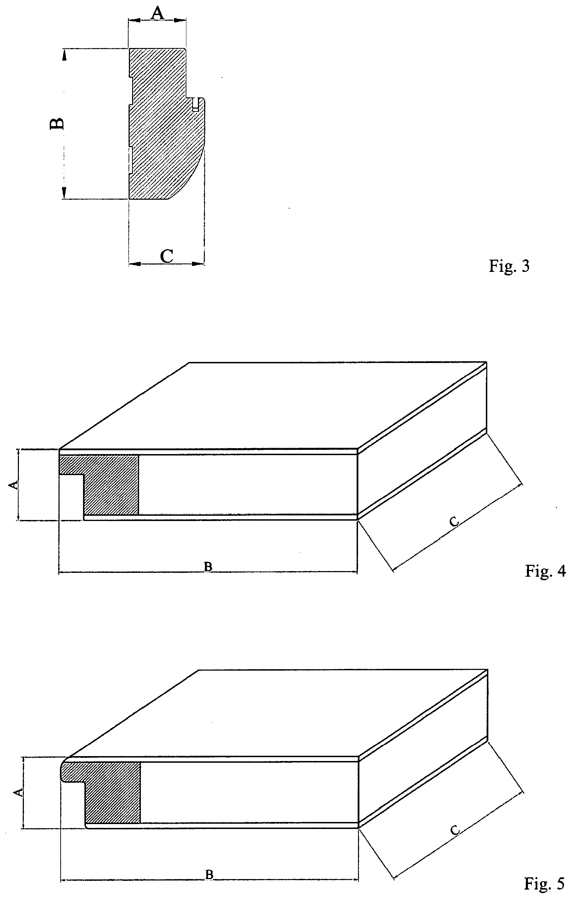

The invention is additionally illustrated by examples, including comparative examples and prefered exemplary embodiments which are not intended to limit the scope of protection in any way. Fig. 3, 4 and 5 illustrate preparation of samples to be used in tests and assign sample sizes indicated in the tests.

### Example 1

Door frame elements comprising two vertical columns and a horizontal beam are made using a moisture resistant MDF board (Medium Density Fibreboard for Use in Humid Conditions With Low Formaldehyde Content, FINSA, of Santiago de Compostela, Spain). Large format MDF board is cut on a multifunction panel saw Selco, and this enables preparation of blocks in any configuration. Cutting operation is controlled by operator who establishes the kind and form of blocks. Blocks are subject to milling operations on Wenig milling machine, to form door frame elements which are then wrapped with a finishing foil on Barberan wrapping machine. For the purpose of testing waterproof properties, sections of 30 cm are prepared.

For comparative purposes door frame elements are analogously manufactured but with the use of a non-hydrophobized MDF board.

The following wrapping materials are used:
- wrapping material CPL White (foil microflex 15 morbida 8348 bianco) and wrapping material Acacia CPL - (foil microslim melaminico 15 morbida 8605) - laminates CPL 5 (La-con S.p.A., of Villa Santina, Italy) composed of several hot pressed (ca. 180-200°C) layers of paper soaked with resins and decorative paper impregnated with melamine or acrylic resins, with a resin hardened under a pressure of 8-10 bar at the outermost side that offers a high mechanical strength, high surface hardness and high scratch, wear, dirt and moisture resistance to the wrapping CPL material; due to the wood structural pattern on the surface, CPL laminates provide an effect of natural look of wood or veneer for the door;
- decorative wrapping material Greco Oak Dark (CATAS S. p. A., of S. Giovanni al Nat., Italy) - cellulosic paper impregnated with resins, covered with paints and finished with surface lacquer; technical parameters of the pre-impregnated paper are compatible with the use of such adhesives as EVA (ethylene polyvinyl acetate copolymer), polyurethane adhesive;
- wrapping material Golden Oak TWIN - a wrapping material comprising a carrier layer of a thermoplastic organic polymer being PCV, coated with a decorative layer and an overlay lacquer layer.

Wrapping is effected with the use of the following adhesives:
- hot-melt polyolefine adhesive Jowat-Hightherm® Poliolifina, available under the tradename Jowat 221.80 (Jowat Poland sp. z o.o., of Sady k. Poznania, Poland), applied by nozzles (with accurate dosing grammage of the adhesive applied, 80-120 g/m²) at a temperature of about 180°C; hereinafter in the examples referred to as polyolefine adhesive;
- hot-melt polyurethane adhesive (hot-melt reactive adhesive PUR) Jowatherm-Reaktant®, available under the tradename Jowat 605.60 (Jowat Poland sp. z o.o., of Sady k. Poznania, Poland), applied by nozzles (with accurate dosing grammage of the adhesive applied, 60-80 g/m²) at a temperature of about 120°C; hereinafter in the examples referred to as polyurethane adhesive;
and the wrapping material is pressed with pressure rollers during continuous movement of the element being wrapped.

Wrapping with the use of the polyurethane adhesive is performed with a relatively low level of adhesive application grammage (60-80 g/m²).

Preparation of adhesive for tests. Six door frame elements are prepared formed as vertical columns. From each vertical column five sections of 30 cm are cut by means of transverse cut to provide thirty samples for testing.

Measurement mode. A door frame sample at a time point t₀ is immersed in water so as the water level reaches 3 cm when measured from the bottom edge of the sample. Measurements of dimensions A, B, C (shown in Fig. 3) and sample weight are effected after 1 hour (time point t₁), 2 hours (time point t₂) and after 24 hours (time point t3).

Door frame elements are prepared in the following embodiment: constructive material of profile cut out of a moisture resistant MDF board, wrapping material Golden Oak TWIN, polyolefine adhesive. Averaging measurement results (mean values for thirty measurements) are presented in Table 1.

**Table 1. Test results for door frame samples immersed in water**

| | Linear measurement value [mm] | | | Sample weight [g] |
|---|---|---|---|---|
| Measurement mode | A | B | C | |
| t₀ | 33.7 | 89.7 | 44.7 | 524.7 |
| t₁ = 1 h | 33.9 | 89.8 | 44.8 | 525.4 |
| t₂ = 2 h | 34.1 | 89.9 | 44.9 | 525.7 |
| t₃ = 24 h | 35.1 | 90 | 46.3 | 531.2 |
| | | | | |
| Relative increase, from t₀ to t₃ | 4.15% | 0.33% | 3.58% | 1.24% |

Visual evaluation: the tested samples have a clearly visible line that separates the portion of the sample immersed in water from the portion above the waterline, and moreover delamination of the wrapping material from the MDF material occurs.

### Example 2

Door frame elements are prepared by the method as defined in Example 1, in the following embodiment: wrapping material Golden Oak TWIN, constructive material of a profile cut out from a moisture resistant MDF board, polyurethane adhesive. Samples for measurements are prepared as in Example 1, with the use of the measurement mode as in Example 1. Averaging measurement results (mean values for thirty measurements) are presented in Table 2.

**Table 2. Test results for door frame samples immersed in water**

| | Linear measurement value [mm] | | | Sample weight [g] |
|---|---|---|---|---|
| Measurement mode | A | B | C | |
| t₀ | 33.65 | 89.6 | 44.6 | 522.1 |
| t₁ = 1 h | 33.8 | 89.7 | 44.8 | 523 |
| t₂ = 2 h | 33.8 | 89.7 | 44.9 | 523.3 |
| t₃ = 24 h | 34.6 | 89.8 | 46.1 | 528.9 |
| | | | | |
| Relative increase, from t₀ to t₃ | 2.82% | 0.22% | 3.36% | 1.30% |

Visual evaluation: the tested samples maintain the original functionalities and no visible line separating the portion of the sample immersed in water from the portion above the waterline occurs; in few cases slight delamination of the wrapping material from the MDF material is observed.

### Example 3

Door frame elements are prepared by the method as defined in Example 1, in the following embodiment: wrapping material Golden Oak TWIN, constructive material of a profile cut out from a (non-hydrophobized) MDF board, polyolefine adhesive. Samples for measurements are prepared as in Example 1, with the use of the measurement mode as in Example 1. Averaging measurement results (mean values for thirty measurements) are presented in Table 3.

**Table 3. Test results for door frame samples immersed in water**

| | Linear measurement value [mm] | | | Sample weight [g] |
|---|---|---|---|---|
| Measurement mode | A | B | C | |
| t₀ | 33.7 | 89.9 | 44.2 | 508.9 |
| t₁ = 1 h | 34.1 | 89.9 | 44.6 | 510 |
| t₂ = 2 h | 34.4 | 90.1 | 44.9 | 510.5 |
| t₃ = 24 h | 36.1 | 90.1 | 46.45 | 516 |
| | | | | |
| Relative increase, from t₀ to t₃ | 7.12% | 0.22% | 5.09% | 1.40% |

Visual evaluation: the tested samples are deformed and have a clearly visible line that separates the portion of the sample immersed in water from the portion above the waterline, and moreover delamination of the wrapping material from the MDF material occurs.

### Example 4

Door frame elements are prepared by the method as defined in Example 1, in the following embodiment: wrapping material Golden Oak TWIN, constructive material of a profile cut out from a (non-hydrophobized) MDF board, polyurethane adhesive. Samples for measurements are prepared as in Example 1, with the use of the measurement mode as in Example 1. Averaging measurement results (mean values for thirty measurements) are presented in Table 4.

**Table 4. Test results for door frame samples immersed in water**

| | Linear measurement value [mm] | | | Sample weight [g] |
|---|---|---|---|---|
| Measurement mode | A | B | C | |
| t₀ | 33.8 | 90 | 44.2 | 512.5 |
| t₁ = 1 h | 33.9 | 90 | 44.5 | 513.4 |
| t₂ = 2 h | 34.2 | 90.1 | 44.8 | 513.7 |
| t₃ = 24 h | 35.2 | 90.25 | 46.1 | 517.2 |
| | | | | |
| Relative increase, from t₀ to t₃ | 4.14% | 0.28% | 4.30% | 0.92% |

Visual evaluation: the tested samples are deformed and have a clearly visible line that separates the portion of the sample immersed in water from the portion above the waterline, and moreover delamination of the wrapping material from the MDF material occurs.

### Example 5

Door frame elements are prepared by the method as defined in Example 1, in the following embodiment: wrapping material Acacia CPL, constructive material of a profile cut out from a moisture resistant MDF board, polyolefine adhesive. Samples for measurements are prepared as in Example 1, with the use of the measurement mode as in Example 1. Averaging measurement results (mean values for thirty measurements) are presented in Table 5.

**Table 5. Test results for door frame samples immersed in water**

| | Linear measurement value [mm] | | | Sample weight [g] |
|---|---|---|---|---|
| Measurement mode | A | B | C | |
| t₀ | 33.5 | 89.55 | 44.25 | 522.5 |
| t₁ = 1 h | 33.7 | 89.6 | 44.4 | 523.3 |
| t₂ = 2 h | 33.9 | 89.8 | 44.6 | 523.6 |
| t₃ = 24 h | 35 | 89.8 | 45.8 | 529.7 |
| | | | | |
| Relative increase, from t₀ to t₃ | 4.48% | 0.28% | 3.50% | 1.38% |

Visual evaluation: the tested samples have a visible line that separates the portion of the sample immersed in water from the portion above the waterline, and moreover delamination of the wrapping material from the MDF board occurs.

### Example 6

Door frame elements are prepared by the method as defined in Example 1, in the following embodiment: wrapping material Acacia CPL, constructive material of a profile cut out from a moisture resistant MDF board, polyurethane adhesive. Samples for measurements are prepared as in Example 1, with the use of the measurement mode as in Example 1. Averaging measurement results (mean values for thirty measurements) are presented in Table 6.

**Table 6. Test results for door frame samples immersed in water**

| | Linear measurement value [mm] | | | Sample weight [g] |
|---|---|---|---|---|
| Measurement mode | A | B | C | |
| t₀ | 33.4 | 89.35 | 44.4 | 523.2 |
| t₁ = 1 h | 33.5 | 89.5 | 44.5 | 524.1 |
| t₂ = 2 h | 33.8 | 89.5 | 44.7 | 524.5 |
| t₃ = 24 h | 34.7 | 89.6 | 45.9 | 531.9 |
| | | | | |
| Relative increase, from t₀ to t₃ | 3.89% | 0.28% | 3.38% | 1.66% |

Visual evaluation: the tested samples maintain the original functionalities and no visible line separating the portion of the sample immersed in water from the portion above the waterline appears; in few cases slight delamination of the wrapping material from the MDF material occurs.

### Example 7

Door frame elements are prepared by the method as defined in Example 1, in the following embodiment: wrapping material Acacia CPL, constructive material of a profile cut out from a (non-hydrophobized) MDF board, polyolefine adhesive. Samples for measurements are prepared as in Example 1, with the use of the measurement mode as in Example 1. Averaging measurement results (mean values for thirty measurements) are presented in Table 7.

**Table 7. Test results for door frame samples immersed in water**

| | Linear measurement value [mm] | | | Sample weight [g] |
|---|---|---|---|---|
| Measurement mode | A | B | C | |
| t₀ | 33.45 | 89.4 | 44.25 | 512.2 |
| t₁ = 1 h | 33.85 | 89.5 | 44.5 | 513.9 |
| t₂ = 2 h | 34.3 | 89.6 | 44.9 | 514.8 |
| t₃ = 24 h | 36.4 | 89.6 | 46.6 | 525.3 |
| | | | | |
| Relative increase, from t₀ to t₃ | 8.82% | 0.22% | 5.31% | 2.56% |

Visual evaluation: the tested samples are deformed and have a clearly visible line that separates the portion of the sample immersed in water from the portion above the waterline, and moreover delamination of the wrapping material from the MDF material occurs.

### Example 8

Door frame elements are prepared by the method as defined in Example 1, in the following embodiment: wrapping material Acacia CPL, constructive material of a profile cut out from a (non-hydrophobized) MDF board, polyurethane adhesive. Samples for measurements are prepared as in Example 1, with the use of the measurement mode as in Example 1. Averaging measurement results (mean values for thirty measurements) are presented in Table 8.

**Table 8. Test results for door frame samples immersed in water**

| | Linear measurement value [mm] | | | Sample weight [g] |
|---|---|---|---|---|
| Measurement mode | A | B | C | |
| t₀ | 33.5 | 89.7 | 44.15 | 507.8 |
| t₁ = 1 h | 33.65 | 89.7 | 44.4 | 508.9 |
| t₂ = 2 h | 34 | 89.95 | 44.7 | 509.3 |
| t₃ = 24 h | 35.5 | 90 | 46.15 | 513 |
| | | | | |
| Relative increase, from t₀ to t₃ | 5.97% | 0.33% | 4.53% | 1.02% |

Visual evaluation: the tested samples are deformed and have a clearly visible line that separates the portion of the sample immersed in water from the portion above the waterline, and moreover delamination of the wrapping material from the MDF material occurs.

### Example 9

Door frame elements are prepared by the method as defined in Example 1, in the following embodiment: wrapping material Greco Oak Dark, constructive material of a profile cut out from a moisture resistant MDF board, polyolefine adhesive. Samples for measurements are prepared as in Example 1, with the use of the measurement mode as in Example 1. Averaging measurement results (mean values for thirty measurements) are presented in Table 9.

**Table 9. Test results for door frame samples immersed in water**

| | Linear measurement value [mm] | | | Sample weight [g] |
|---|---|---|---|---|
| Measurement mode | A | B | C | |
| t₀ | 33.3 | 89.3 | 44.3 | 500 |
| t₁ = 1 h | 33.55 | 89.3 | 44.5 | 500.7 |
| t₂ = 2 h | 33.7 | 89.4 | 44.7 | 501 |
| t₃ = 24 h | 34.75 | 89.4 | 46.1 | 506.8 |
| | | | | |
| Relative increase, from t₀ to t₃ | 4.35% | 0.11% | 4.06% | 1.36% |

Visual evaluation: the tested samples have a clearly visible line that separates the portion of the sample immersed in water from the portion above the waterline, and moreover delamination of the wrapping material from the MDF material occurs.

### Example 10

Door frame elements are prepared by the method as defined in Example 1, in the following embodiment: wrapping material Greco Oak Dark, constructive material of a profile cut out from a moisture resistant MDF board, polyurethane adhesive. Samples for measurements are prepared as in Example 1, with the use of the measurement mode as in Example 1. Averaging measurement results (mean values for thirty measurements) are presented in Table 10.

**Table 10. Test results for door frame samples immersed in water**

| | Linear measurement value [mm] | | | Sample weight [g] |
|---|---|---|---|---|
| Measurement mode | A | B | C | |
| t₀ | 33.3 | 89.2 | 44.15 | 521.3 |
| t₁ = 1 h | 33.5 | 89.3 | 44.35 | 522.1 |
| t₂ = 2 h | 33.7 | 89.4 | 44.5 | 522.5 |
| t₃ = 24 h | 34.6 | 89.5 | 44.6 | 528.9 |
| | | | | |
| Relative increase, from t₀ to t₃ | 3.90% | 0.34% | 1.02% | 1.46% |

Visual evaluation: the tested samples show defects, have a clearly visible line that separates the portion of the sample immersed in water from the portion above the waterline, and moreover delamination of the wrapping material from the MDF material occurs.

### Example 11

Door frame elements are prepared by the method as defined in Example 1, in the following embodiment: wrapping material Walnut Greco, constructive material of a profile cut out from a (non-hydrophobized) MDF board, polyolefine adhesive. Samples for measurements are prepared as in Example 1, with the use of the measurement mode as in Example 1. Averaging measurement results (mean values for thirty measurements) are presented in Table 11.

**Table 11. Test results for door frame samples immersed in water**

| | Linear measurement value [mm] | | | Sample weight [g] |
|---|---|---|---|---|
| Measurement mode | A | B | C | |
| t₀ | 33.3 | 89.3 | 44.1 | 509.8 |
| t₁ = 1 h | 33.45 | 89.45 | 44.3 | 510.8 |
| t₂ = 2 h | 34.05 | 89.5 | 44.6 | 511.1 |
| t₃ = 24 h | 36.15 | 89.6 | 46.35 | 515.8 |
| | | | | |
| Relative increase, from t₀ do t₃ | 8.56% | 0.34% | 5.10% | 1.18% |

Visual evaluation: the tested samples are deformed and have a clearly visible line that separates the portion of the sample immersed in water from the portion above the waterline, and moreover delamination of the wrapping material from the MDF material occurs.

### Example 12

Door frame elements are prepared by the method as defined in Example 1, in the following embodiment: wrapping material Greco Oak Dark, constructive material of a profile cut out of a (non-hydrophobized) MDF board, polyurethane adhesive. Samples for measurements are prepared as in Example 1, with the use of the measurement mode as in Example 1. Averaging measurement results (mean values for thirty measurements) are presented in Table 12.

**Table 12. Test results for door frame samples immersed in water**

| | Linear measurement value [mm] | | | Sample weight [g] |
|---|---|---|---|---|
| Measurement mode | A | B | C | |
| t₀ | 33.35 | 89.4 | 44.1 | 504.6 |
| t₁ = 1 h | 33.6 | 89.5 | 44.3 | 505.6 |
| t₂ = 2 h | 33.8 | 89.5 . | 44.6 | 505.8 |
| t₃ = 24 h | 35.3 | 89.7 | 46.1 | 509.3 |
| | | | | |
| Relative increase, from t₀ to t₃ | 5.85% | 0.34% | 4.54% | 0.93% |

Visual evaluation: the tested samples have a clearly visible line that separates the portion of the sample immersed in water from the portion above the waterline, and moreover delamination of the wrapping material from the MDF material occurs.

Results from Examples 1-12 show that during a 24-hour exposure to water, samples of door frame elements absorb water within a range of 0,9-2,6% based on their original weight, regardless of whether they are made or non-hydrophobized or hydrophobized MDF. On the other hand, samples of door frame elements made of non-hydrophobized MDF show considerably higher and more uneven level of swelling and more defects than for hydrophobized MDF. As regards door frame elements wrapped with the use of the polyolefine adhesive, at least defects consisting on delamination of the wrapping material occur. Significant enhancement of resistance to water occurs only in the Examples where a combination of hydrophobized MDF, substantially water-unabsorbable wrapping material and polyurethane adhesive is used (Examples 2 and 6).

### Example 13

For the manufacture of a door leaf panel a moisture resistant MDF board (Medium Density Fibreboard for Use in Humid Conditions With Low Formaldehyde Content, FINSA, of Santiago de Compostela, Spain) is used. A large format MDF board is cut on a Selco multifunction panel saw into vertical stiles and horizontal rail of the door leaf panel which are then assembled into a form of a framework for a panel and the spaces between the stiles and rails are packed with a structured lightweight filling (made of a Homalight® D board - LDF board, Low Density Fibreboard, d = 200 kg/m³, Homanit GmbH & Co. KG, Germany, or a honeycomb-shaped filling), and the panel framework is covered at both sides with a moisture resistant HDF board (High Density Fibreboard for Use in Humid Conditions With Low Formaldehyde Content, FINSA, of Santiago de Compostela, Spain), with the use of a ORMA press and with the use of Woodmax® WR 13.50 M adhesive (polyvinyl acetate-based dispersion adhesive, waterproofness class D3, Synthos Dwory sp. z o.o. S.K.A., of Oświ 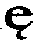 cim, Poland). A raw door leaf panel, upon formatting on a GABBIANI milling machine, is wrapped with a finishing foil on a BARBERAN wrapping machine. For the purpose of waterproofness testing, a corner section is prepared as illustrated in Fig. 4 or Fig. 5, respectively.

For the comparative purposes, analogous door leaf panels are prepared, but with the use of non-hydrophobized MDF and HDF boards.

The following wrapping materials are used:
- wrapping material CPL White (foil microflex 15 morbida 8348 bianco) and wrapping material 15 CPL Acacia - (foil microslim melaminico 15 morbida 8605) (La-con S.p.A., of Villa Santina, Italy) - CPL laminates composed of several hot pressed (ca. 180-200°C) layers of paper soaked with resins and decorative paper impregnated with melamine or acrylic resins, with a resin hardened under a pressure of 8-10 bar on its outermost surface that ensures obtaining of a CPL wrapping material of a high mechanical strength, high surface hardness and high resistance to scratching, wearing, dirt and moisture. As a result of applying embossed wood structural pattern on the surface, CPL laminates offer an effect of natural look of wood or veneer to the door;
- decorative wrapping material Greco Oak Dark (CATAS S.p.A., of S. Giovanni al Nat., Italy) - cellulosic paper impregnated with resins, covered with paints and finished with a surface lacquer; technical parameters of the pre-impregnated paper make it possible to use adhesives, inter alia EVA, PUR;
- decorative wrapping material Walnut (VTO-Dekor Sp. z o.o., of G 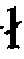 ogówek, Poland) - cellulosic paper impregnated with resins, covered with paints and finished with surface lacquer.

Wrapping is effected with the use of the following adhesives:
- ethylene and polyvinyl acetate-based (EVA) hot-melt adhesive, available under tradename Henkel PW839, applied with a roller at a temperature of 170-180°C; hereinafter referred to in the Examples as EVA adhesive;
- hot-melt polyolefine adhesive Jowat-Hightherm® Poliolifina, available under tradename Jowat 221.80 (Jowat Poland sp. z o.o., of Sady k. Poznania, Poland), applied from nozzles (with accurate dosing grammage of the adhesive applied, 80-120 g/m²) at a temperature of about 180°C; hereinafter referred to in the Examples as polyolefin adhesive;
- hot-melt polyurethane adhesive (hot-melt reactive PUR adhesive) Jowatherm-Reaktant®, available under tradename Jowat 605.60 (Jowat Poland sp. z o.o., of Sady k. Poznania, Poland), applied from nozzles (with accurate dosing grammage of the adhesive applied, 60-80 g/m²) at a temperature of about 120°C; hereinafter referred to in the Examples as polyurethane adhesive;
and the wrapping material is pressed with pressure rollers during continuous movement of the element being wrapped.

Wrapping with the use of a polyurethane adhesive is effected at a relatively low grammage level for applying adhesive (60-80 g/m²).

Preparation of material for tests. 15 door leaf panels are prepared. From each panel two portions are cut out (at the side of the left panel edge and at the side of the right panel edge) of a rectangular shape dimensioned A, B, C, as illustrated in Fig. 4 or Fig. 5, respectively, to obtain 15 left-side sections and 15 right-side sections, providing 30 samples for testing in total.

Measurement mode. A panel sample at a time point t₀ is immersed in water so as the level of water reaches 3 cm as measured from the bottom edge of the sample. Measurements of dimensions A, B, C and the sample weight are carried out after 1 hour (time point t₁), 2 hours (time point t₂) and after 24 hours (time point t3).

A door leaf panel is assembled in the following embodiment: edge according to Fig. 5, wrapping material CPL White, constructive material of stiles and rails cut out of a moisture resistant MDF board, filling - Homalight D board, sheathing - moisture resistant HDF board, polyolefine adhesive. Averaging measurement results (mean values for thirty measurements) are presented in Table 13.

**Table 13**

| Test results for panel samples (sections according to Fig. 5) immersed in water | | | | |
|---|---|---|---|---|
| | Linear measurement value [mm] | | | Sample weight [g] |
| Measurement mode | A | B | C | |
| t₀ | 40.25 | 240.5 | 242 | 1152.8 |
| t₁ = 1 h | 40.4 | 240.5 | 242 | 1154.5 |
| t₂ = 2 h | 40.75 | 240.5 | 242 | 1155.4 |
| t₃ = 24 h | 41.3 | 241.5 | 243 | 1177.5 |
| | | | | |
| Relative increase, from t₀ to t₃ | 2.61% | 0.41% | 0.41% | 2.14% |

Visual evaluation: the tested samples have blisters, delamination of the wrapping material from the substrate occurs, and the line that separates the segment of the sample immersed in water from the segment above the waterline is clearly visible.

### Example 14

A door leaf panel is assembled by the method as defined in Example 13, in the following embodiment: edge according to Fig. 5, wrapping material CPL White, constructive material - stiles and rails cut out from moisture resistant MDF board, filling - Homalight D board, sheathing - moisture resistant HDF board, polyurethane adhesive. Samples for measurements are prepared as in Example 13, with the use of the measurement mode as in Example 13. Averaging measurement results (mean values for thirty measurements) are presented in Table 14.

**Table 14**

| Test results for panel samples (sections according to Fig. 5) immersed in water | | | | |
|---|---|---|---|---|
| | Linear measurement value [mm] | | | Sample weight [g] |
| Measurement mode | A | B | C | |
| t₀ | 40.3 | 240.5 | 242 | 1152.4 |
| t₁ = 1 h | 40.4 | 240.5 | 242 | 1154.6 |
| t₂ = 2 h | 40.65 | 240.5 | 242 | 1156 |
| t₃ = 24 h | 41.35 | 241.5 | 243 | 1181.1 |
| | | | | |
| Relative increase, from t₀ to t₃ | 2.61% | 0.41% | 0.41% | 2.49% |

Visual evaluation: the tested samples maintain the original functionalities and there is no visible line separating the segment of the sample immersed in water from the segment above the waterline; in few cases slight delamination of the wrapping material from the MDF material/HDF is observed.

### Example 15

A door leaf panel is assembled by the method as defined in Example 13, in the following embodiment: edge according to Fig. 4, wrapping material CPL Acacia, constructive material - stiles and rails cut out from MDF (non-hydrophobized) board, sheathing - HDF (non-hydrophobized) board, filling - honeycomb, polyolefine adhesive. Samples for measurements are prepared as in Example 13, with the use of the measurement mode as in Example 13. Averaging measurement results (mean values for thirty measurements) are presented in Table 15.

**Table 15**

| Test results for panel samples (sections according to Fig. 4) immersed in water | | | | |
|---|---|---|---|---|
| | Linear measurement value [mm] | | | Sample weight [g] |
| Measurement mode | A | B | C | |
| t₀ | 40 | 240 | 240 | 770.6 |
| t₁ = 1 h | 40.5 | 240 | 240 | 774.6 |
| t₂ = 2 h | 40.55 | 240 | 241 | 775.7 |
| t₃ = 24 h | 41.6 | 241 | 245 | 789.6 |
| | | | | |
| Relative increase, from t₀ to t₃ | 4.00% | 0.42% | 2.08% | 2.47% |

Visual evaluation: the tested samples show cracks and delamination of the MDF board, defects are visible at the edges where the sheets of the wrapping material enter into contact with each other.

### Example 16

A door leaf panel is assembled by the method as defined in Example 13, in the following embodiment: edge according to Fig. 5, wrapping material Greco Oak Dark, constructive material - stiles and rails cut out from MDF (non-hydrophobized) board, sheathing - HDF (non-hydrophobized) board, filling - Homalight board, EVA adhesive. Samples for measurements are prepared as in Example 13, with the use of the measurement mode as in Example 13. Averaging measurement results (mean values for thirty measurements) are presented in Table 16.

**Table 16**

| Test results for panel samples (sections according to Fig. 5) immersed in water | | | | |
|---|---|---|---|---|
| | Linear measurement value [mm] | | | Sample weight [g] |
| Measurement mode | A | B | C | |
| t₀ | 40.05 | 240 | 240 | 1232.3 |
| t₁ = 1 h | 40.5 | 240 | 240 | 1235.3 |
| t₂ = 2 h | 40.5 | 240 | 240.8 | 1236.2 |
| t₃ = 24 h | 41.4 | 241.8 | 242 | 1244.1 |
| | | | | |
| Relative increase, from t₀ to t₃ | 3.37% | 0.75% | 0.83% | 0.96% |

Visual evaluation: the tested samples are deformed, delamination of the MDF board occurs, cracks are visible in the wrapping material and the line that separates the segment of the sample immersed in water from the segment above the waterline is clearly visible.

### Example 17

A door leaf panel is assembled by the method as defined in Example 13, in the following embodiment: edge according to Fig. 4, wrapping Walnut, constructive material - stiles and rails cut out from MDF (non-hydrophobized) board, sheathing - HDF (non-hydrophobized) board, filling - Homalight board, EVA adhesive. Samples for measurements are prepared as in Example 13, with the use of a measuring mode as in Example 13. Averaging measurement results (mean values for thirty measurements) are presented in Table 17.

**Table 17**

| Test results for panel samples (sections according to Fig. 4) immersed in water | | | | |
|---|---|---|---|---|
| | Linear measurement value [mm] | | | Sample weight [g] |
| Measurement mode | A | B | C | |
| t₀ | 40.1 | 240 | 240 | 1247.7 |
| t₁ = 1 h | 40.7 | 240 | 240 | 1250.7 |
| t₂ = 2 h | 40.8 | 240 | 241 | 1251.6 |
| t₃ = 24 h | 42.2 | 243 | 243 | 1263.3 |
| | | | | |
| Relative increase, from t₀ to t₃ | 5.24% | 1.25% | 1.25% | 1.25% |

Visual evaluation: the tested samples are deformed, delamination of the board MDF occurs, cracks are visible in the wrapping material and the line that separates the segment of the sample immersed in water from the segment above the waterline is clearly visible.

The results of Examples 13-17 show that during a 24-hour exposure to water, door leaf panel samples absorb water within the range of 1-2,5% based on their original weight, regardless of whether they are made of non-hydrophobized or hydrophobized MDF and HDF boards. On the other hand, panel samples made of non-hydrophobized MDF and HDF boards show clearly a higher and less even level of swelling and larger defects than in the case of hydrophobized MDF and HDF. In the case of panels wrapped with the use of an EVA adhesive and polyolefine adhesive there are at least defects consisting on delamination of the wrapping material. A significant enhancement in resistance to water occurs only in these examples where a combination of a hydrophobized MDF, substantially water-unabsorbable wrapping and a polyurethane adhesive (Example 14) is used.

## Claims

1. A method for manufacturing a complete door assembly consisting of door frame elements (2) made of hydrophobized MDF and a door leaf panel (1) of framework structure with a structured lightweight filling, said door leaf panel (1) having stiles and rails made of hydrophobized MDF covered at both sides with a hydrophobized HDF board, said door frame elements (2) and door leaf panel (1) wrapped with a wrapping material with the use of a hot-melt adhesive, providing raw door frame elements (2) milled of hydrophobized MDF board and adjusted dimensionally mating with said panel (1), which door frame elements (2) comprise two vertical columns (2.1) and a cross-beam (2.2); wherein the door frame elements (2) and door leaf panel (1) are independently wrapped with a wrapping material being substantially water-unabsorbable using a hot-melt reactive polyurethane adhesive applied at 60-80 g/m² with a nozzle assembly, at a temperature of 110-130°C; and leaving thus wrapped a door leaf panel (1) and door frame elements (2) for crosslinking of the adhesive to obtain a complete door assembly of improved water-durability, featured by lack of shape deformation or substantial delamination of the wrapping material from the surface of the MDF/HDF material under the conditions of high humidity, changeable humidity and/or at least 24-hour exposure to liquid water.

2. A method for manufacturing a complete door assembly according to claim 1, **characterized by** applying at least one edge band (3) made of a water-unabsorbable wrapping material onto the narrow face of the door leaf panel (1).

3. A method for manufacturing a complete door assembly according to any of claims 1 or 2, **characterized by** applying an adhesive at a temperature 115-130°C.

4. A method for manufacturing a complete door assembly according to any of claims 1-3, **characterized by** the use, as the structured lightweight filling, of an LDF board of a density not exceeding 300 kg/m³.

5. A method for manufacturing a complete door assembly according to claims 1-4, **characterized by** the use of a wrapping material selected from a group comprising a wrapping material having at least one carrier layer made of organic plastics, and a wrapping material having at least one carrier layer made of a cellulosic material impregnated with synthetic organic resins.

## Patentansprüche

1. Verfahren zur Herstellung eines kompletten Türsatzes, bestehend aus Rahmenelementen (2) aus hydrophobierter MDF und einem Türblatt (1) in der Rahmenausführung mit einer strukturierten Leichtbaufüllung, wobei das Türblatt (1) aus Pfosten und Riegel aus hydrophobierter MDF besteht, die beidseitig mit einer hydrophobierten HDF-Platte beplankt sind, wobei die Rahmenelemente (2) und das Türblatt (1) mit einer Beschichtung aus Schmelzklebstoffen versehen sind und rohe Rahmentürelemente (2) umfassen, die aus hydrophobierter MDF gefräst sind und an die Maße des Blatts (1) angepasst sind, wobei die Rahmentürelemente (2) zwei vertikale Säulen (2.1) und einen Querprofil (2.2) umfassen; wobei die Rahmentürelemente (2) und das Türblatt (1) unabhängig voneinander mit einer Beschichtung versehen sind, die grundsätzlich wasserfest ist und unter Verwendung einer Polyurethan-Heißschmelzbeschichtung in einer Auftragsmenge von 60-80 g/m2 mit Hilfe von Düsen bei einer Temperatur von 110-130°C auf die Teile aufgetragen wird; danach werden das so beschichtete Blatt (1) und die Rahmentürelemente (2) solange belassen bis die Beschichtung vollständig vernetzt hat, um einen vollständigen Türsatz mit verbesserter Wasserbeständigkeit zu erhalten, die sich dadurch auszeichnet, dass die am MDF/HDF-Material aufgetragene Beschichtung sich unter Bedingungen erhöhter Feuchtigkeit, sich schnell veränderter Feuchtigkeit und/oder Einwirkung von Wasser über mindestens 24-Stunden, nicht verformt oder abblättert.

2. Verfahren zur Herstellung eines kompletten Türsatzes nach Anspruch 1, **dadurch gekennzeichnet, dass** auf die Schmalseite des Türblatts (1) mindestens ein Kantenband (3) aus einem wasserresistenten Beschichtungsmaterial aufgebracht wird.

3. Verfahren zur Herstellung eines kompletten Türsatzes nach einem der Ansprüche 1 oder 2, **dadurch gekennzeichnet, dass** die Beschichtung bei Temperatur von 115-130°C aufgetragen wird.

4. Verfahren zur Herstellung eines kompletten Türsatzes nach einem der Ansprüche 1 bis 3, **dadurch gekennzeichnet, dass** eine LDF-Platte mit einer Dichte von maximal 300 kg/m3 als die strukturierte Leichtbaufüllung eingesetzt wird.

5. Verfahren zur Herstellung eines kompletten Türsatzes nach einem der Ansprüche 1 bis 4, **dadurch gekennzeichnet, dass** ein Beschichtungsmaterial eingesetzt wird, das aus einer Gruppe von Stoffen ausgewählt ist, die Beschichtungen mit mindestens einer Tragschicht aus organischem Kunststoff und Beschichtungen mit mindestens einer Tragschicht aus einem mit organischen Kunstharzen imprägnierten Zellulosematerial umfasst.

## Revendications

1. Procédé de fabrication d'un ensemble de porte complet constitué d'éléments (2) de cadre de porte en MDF hydrophobisé et d'un panneau (1) de vantail de porte de la structure de cadre avec un remplissage léger structuré, ledit panneau (1) de vantail de porte ayant des montants et des rails en MDF hydrophobisé recouverts des deux côtés d'un panneau HDF hydrophobisé, lesdits éléments (2) de cadre de porte et le panneau (1) de vantail de porte enveloppés d'un matériau d'enrobage à l'aide d'un adhésif thermofusible, fournissant des éléments (2) de cadre de porte bruts fraisés en panneau MDF hydrophobisé et ajustés en accouplement dimensionnel avec ledit panneau (1), lesdits éléments (2) de cadre de porte comprennent deux colonnes verticales (2.1) et une traverse (2.2) ; dans lequel les éléments (2) de cadre de porte et le panneau (1) de vantail de porte sont enveloppés indépendamment avec un matériau d'enrobage sensiblement non absorbant de l'eau en utilisant un adhésif polyuréthane réactif thermofusible appliqué à raison de 60 80 g/m² avec un ensemble à buse, à une température de 110 à 130°C ; et laissant ainsi enveloppé un panneau (1) de vantail de porte et des éléments (2) de cadre de porte pour la réticulation de l'adhésif pour obtenir un ensemble de porte complet ayant une meilleure durabilité à l'eau, **caractérisé par** l'absence de déformation de forme ou de délamination substantielle du matériau d'enrobage de la surface du matériau MDF/HDF dans des conditions d'humidité élevée, d'humidité variable et/ou d'exposition d'au moins 24 heures à l'eau liquide.

2. Procédé de fabrication d'un ensemble de porte complet selon la revendication 1, **caractérisé par** l'application d'au moins une bande de chant (3) constituée d'un matériau d'enrobage non absorbant de l'eau sur la face étroite du panneau (1) de vantail de porte.

3. Procédé de fabrication d'un ensemble de porte complet selon l'une quelconque des revendications 1 ou 2, **caractérisé par** l'application d'un adhésif à une température de 115-130°C.

4. Procédé de fabrication d'un ensemble de porte complet selon l'une quelconque des revendications de 1 à 3, **caractérisé par** l'utilisation, en tant que remplissage léger structuré, d'un panneau LDF d'une densité n'excédant pas 300 kg/m³.

5. Procédé de fabrication d'un ensemble de porte complet selon les revendications de 1 à 4, **caractérisé par** l'utilisation d'un matériau d'enrobage choisi dans un groupe comprenant un matériau d'enrobage ayant au moins une couche de support en plastique organique, et un matériau d'enrobage ayant au moins une couche de support constituée d'un matériau cellulosique imprégné de résines organiques synthétiques.
